# EUROPEAN PATENT APPLICATION

(11) **EP 3 342 276 A1**
(43) Date of publication of application: **04.07.2018**
(21) Application number: 17155925.5
(22) Date of filing: 13.02.2017
(51) Int. Cl.: A01G 9/02

(54) **PLANTING POT AND PLANTING POT HOLDING PLATE**

(30) Priority: 03.01.2017 TW 106100014
(71) Applicant: Long Pride Biotechnology Co., Ltd., Kaohsiung City 807 (TW)
(72) Inventor: LIANG, Jiu-Fang, Kaohsiung City 807 (TW); CHOU, Hung-Wen, Kaohsiung City 807 (TW)
(74) Representative: 2K Patentanwälte Blasberg Kewitz & Reichel

(57) **Abstract**

A planting pot (10) includes a straight cylinder part (11) and a diameter-enlarged part (12). The diameter-enlarged part (12) has a first end (121) and a second end (122). The first end (121) is connected to the straight cylinder part (11). The second end (122) is opposite to the first end (121). An outer diameter of the diameter-enlarged part (12) is gradually increased in a direction from the first end (121) to the second end (122). A planting holding plate (50) includes a plate body (40) and a plurality of planting pots (10). The planting pots (10) are connected to the plate body (40) and the planting pots (10) are arranged at intervals.

## Description

### FIELD

The disclosure relates to a pot and a holding plate, more particular to a planting pot and a planting holding plate.

### BACKGROUND

A conventional planting manner of Phalaenopsis is to place the Phalaenopsis and a cultivation medium in a pot, and to enable the cultivation medium to be in direct contact with a bottom surface of the pot. However, according to the foregoing planting manner, there is no space between the cultivation medium and the bottom surface of the pot for aerial roots of the Phalaenopsis to breath and grow, resulting in that the aerial roots creep out from a pot mouth of the pot for growth, thereby destructing overall beauty of the Phalaenopsis. Furthermore, a conventional structural design of the pot fails to effectively control a water level in the pot, so that a situation of excessively high water level may easily occur, which further affects the growth of the Phalaenopsis.

### SUMMARY OF THE INVENTION

In accordance with one aspect of the present disclosure, a planting pot includes a straight cylinder part and a diameter-enlarged part. The diameter-enlarged part has a first end and a second end. The first end is connected to the straight cylinder part. The second end is opposite to the first end. An outer diameter of the diameter-enlarged part is gradually increased in a direction from the first end to the second end.

In accordance with another aspect of the present disclosure, a planting holding plate includes a plate body and a plurality of planting pots. The planting pots are connected to the plate body, and the planting pots are arranged at intervals.

### BRIEF DESCRIPTION OF THE DRAWINGS

Aspects of the present disclosure are understood from the following detailed description when read with the accompanying figures. It is emphasized that, in accordance with the standard practice in the industry, various features are not drawn to scale. In fact, the dimensions of the various features may be arbitrarily increased or reduced for clarity of discussion.
FIG. 1 shows a perspective view of a planting pot in accordance with some embodiments of the present disclosure.
FIG. 2 shows a side view of the planting pot in accordance with some embodiments of the present disclosure.
FIG. 3 shows a top view of the planting pot in accordance with some embodiments of the present disclosure.
FIG. 4 shows a schematic view of placing a cultivation medium and a plant in the planting pot in accordance with some embodiments of the present disclosure.
FIG. 5 shows another perspective view of a planting pot in accordance with some embodiments of the present disclosure.
FIG. 6 shows a perspective view of a planting holding plate in accordance with some embodiments of the present disclosure.

### DETAILED DESCRIPTION OF THE INVENTION

It is to be understood that the following disclosure provides many different embodiments or examples, for implementing different features of various embodiments. Specific examples of components and arrangements are described below to simplify the present disclosure. The present disclosure may, however, be embodied in many different forms and should not be construed as being limited to the embodiments set forth herein; rather, these embodiments are provided so that this description will be thorough and complete, and will fully convey the present disclosure to those of ordinary skill in the art. It will be apparent, however, that one or more embodiments may be practiced without these specific details.

In addition, the present disclosure may repeat reference numerals and/or letters in the various examples. This repetition is for the purpose of simplicity and clarity and does not in itself dictate a relationship between the various embodiments and/or configurations discussed.

It will be understood that singular forms "a", "an" and "the" are intended to include the plural forms as well, unless the context clearly indicates otherwise.

Unless otherwise defined, all terms (including technical and scientific terms) used herein have the same meaning as commonly understood by one of ordinary skill in the art to which this invention belongs. It will be further understood that terms; such as those defined in commonly used dictionaries, should be interpreted as having a meaning that is consistent with their meaning in the context of the relevant art and the present disclosure, and will not be interpreted in an idealized or overly formal sense unless expressly so defined herein.

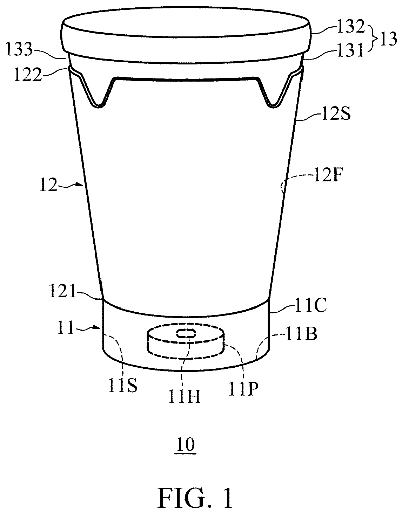

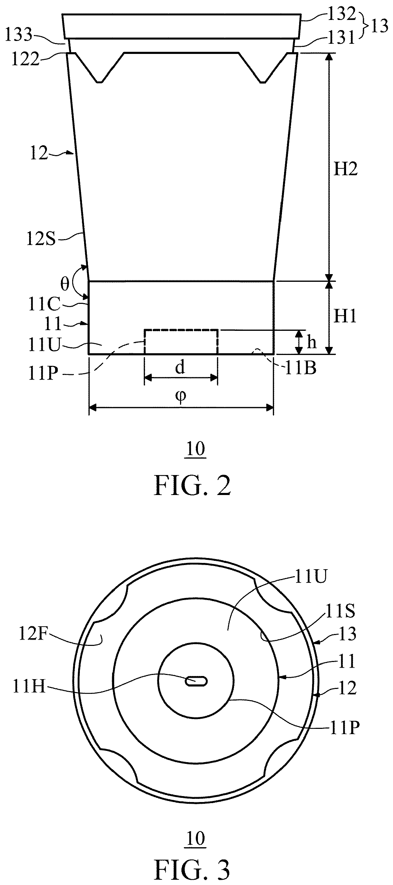

FIG. 1 shows a perspective view of a planting pot in accordance with some embodiments of the present disclosure. FIG. 2 shows a side view of the planting pot in accordance with some embodiments of the present disclosure. FIG. 3 shows a top view of the planting pot in accordance with some embodiments of the present disclosure. Referring to FIG. 1, FIG. 2 and FIG. 3, a planting pot 10 according to the present disclosure at least includes a straight cylinder part 11 and a diameter-enlarged part 12. In one or more embodiments, the planting pot 10 further includes a pot neck part 13.

The straight cylinder part 11 has a bottom surface 11B, an outer peripheral surface 11C, a circular protrusion 11P, and an inner peripheral surface 11S. The outer peripheral surface 11C is substantially perpendicular to the bottom surface 11B. The circular protrusion 11P protrudes from the bottom surface 11B, an annular trough 11U is provided between the circular protrusion 11P and the inner peripheral surface 11S, and the annular trough 11U is used to store water for a plant (for example, Phalaenopsis) to absorb. Furthermore, to prevent the annular trough 11U from affecting the growth of the plant caused by storing an excessively large amount of water, the circular protrusion 11P has at least one water discharging hole 11H. When the water level in the annular trough 11U exceeds the circular protrusion 11P, the excess water is discharged through the water discharging hole 11H, thereby preventing the water level in the annular trough 11U from being excessively high.

In other words, the design dimensions of the circular protrusion 11P determine the amount of water in the annular trough 11U. To enable the amount of water in the annular trough 11U to meet growth needs of the plant (for example, Phalaenopsis), a ratio of an outer diameter d of the circular protrusion 11P to an inner diameter ϕ of the straight cylinder part 11 needs to be controlled between 0.4:1 and 0.5:1 inclusive, and a height h of the circular protrusion 11P needs to be less than a height H1 of the straight cylinder part 11. Preferably, the height h of the circular protrusion 11P needs to be less than or equal to a half of the height H1 of the straight cylinder part 11, so as to provide, in addition to controlling the amount of water in the annular trough 11U, an extra space in the straight cylinder part 11 for the growth of the aerial roots of the plant (for example, Phalaenopsis).

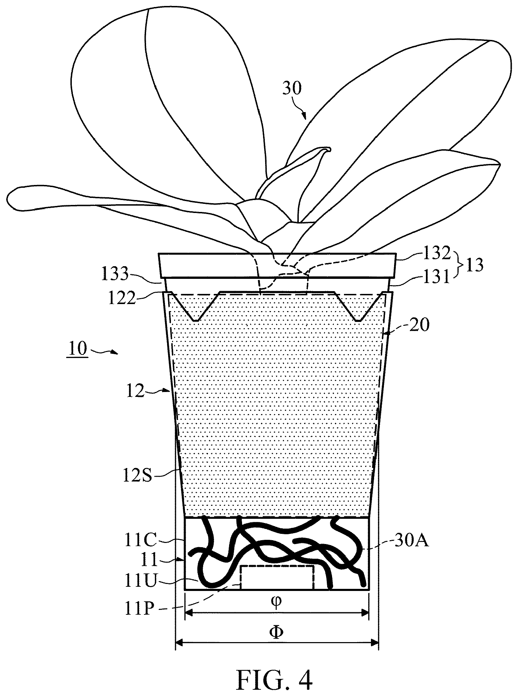

FIG. 4 shows a schematic view of placing a cultivation medium and a plant in the planting pot in accordance with some embodiments of the present disclosure. Referring to FIG. 1, FIG. 2 and FIG. 4, the diameter-enlarged part 12 is used to accommodate a cultivation medium 20, and a plant 30 is planted in the cultivation medium 20.

The diameter-enlarged part 12 has a first end 121, a second end 122, an outer wall surface 12S, and an inner wall surface 12F. The first end 121 is connected to the straight cylinder part 11, and the second end 122 is opposite to the first end 121. Furthermore, an outer diameter of the diameter-enlarged part 12 is gradually increased in a direction from the first end 121 to the second end 122, so that the outer wall surface 12S has a slope, and an angle θ is formed between the outer wall surface 12S and the outer peripheral surface 11C of the straight cylinder part 11. In one or more embodiments, the angle θ is 160° to 170° inclusive, so that a joint of the diameter-enlarged part 12 and the straight cylinder part 11 can generate enough radial turning. When an outer diameter Φ of the cultivation medium 20 is greater than the inner diameter ϕ of the straight cylinder part 11, the radial turning can function to block the cultivation medium 20, thereby preventing the cultivation medium 20 from compressing, by entering the straight cylinder part 11, the growth space of the aerial roots 30A of the plant 30 (for example, Phalaenopsis).

In the foregoing description of embodiments, the design dimensions of the circular protrusion 11P determine the amount of water in the annular trough 11U, and the volume of the cultivation medium 20 also needs to match the amount of water in the annular trough 11U, thereby enabling the plant 30 (for example, Phalaenopsis) to have a good growth environment. The design dimensions of the circular protrusion 11P depend on the height H1 of the straight cylinder part 11, and the volume of the cultivation medium 20 is limited by the diameter-enlarged part 12. Therefore, by means of adjusting the ratio of the height H1 of the straight cylinder part 11 to the height H2 of the diameter-enlarged part 12, and enabling the volume of the cultivation medium 20 to match the dimensions of the diameter-enlarged part 12, the volume of the cultivation medium 20 can be indirectly enabled to match the amount of water in the annular trough 11U. In one or more embodiments, a ratio of the height H1 of the straight cylinder part 11 to the height H2 of the diameter-enlarged part 12 needs to be controlled between 1:2 and 1:6 inclusive, so that the volume of the cultivation medium 20 can better match the amount of water in the annular trough 11U, thereby facilitating the growth of the plant 30 (for example, Phalaenopsis).

Referring to FIG. 1 and FIG. 2 again, the pot neck part 13 is connected to the second end 122 of the diameter-enlarged part 12, and the pot neck part 13 has an inward-retracting section 131 and a pot mouth section 132. The inward-retracting section 131 is connected to the second end 122 of the diameter-enlarged part 12, and the pot mouth section 132 is connected to the inward-retracting section 131. By means of design of the inward-retracting section 131, a recess 133 can be formed between the pot mouth section 132 and the second end 122 of the diameter-enlarged part 12, and the recess 133 can be used to assist hanging or securing the planting pot 10.

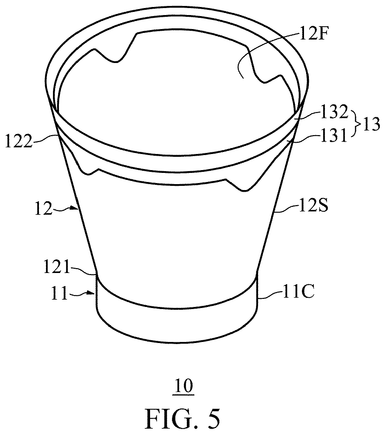

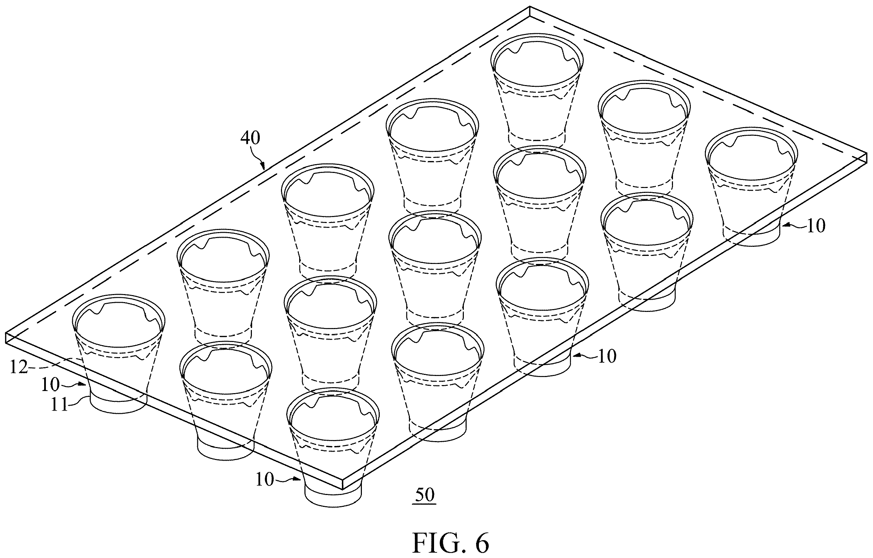

FIG. 5 shows another perspective view of a planting pot in accordance with some embodiments of the present disclosure. FIG. 6 shows a perspective view of a planting holding plate in accordance with some embodiments of the present disclosure. Referring to FIG. 1, FIG. 5 and FIG. 6, a planting holding plate 50 according to the present disclosure includes a plate body 40 and a plurality of planting pots 10. The planting pots 10 are connected to the plate body 40, and the planting pots 10 are arranged at intervals. The planting holding plate 50 can be applied to plant a plurality of plants (for example, Phalaenopsis).

Moreover, the scope of the present application is not intended to be limited to the particular embodiments of the process, machine, manufacture, and composition of matter, means, methods and steps described in the specification. As those skilled in the art will readily appreciate form the present disclosure, processes, machines, manufacture, compositions of matter, means, methods, or steps, presently existing or later to be developed, that perform substantially the same function or achieve substantially the same result as the corresponding embodiments described herein may be utilized according to the present disclosure.

Accordingly, the appended claims are intended to include within their scope such processes, machines, manufacture, and compositions of matter, means, methods or steps. In addition, each claim constitutes a separate embodiment, and the combination of various claims and embodiments are within the scope of the invention.

## Claims

1. A planting pot (10), comprising:
a straight cylinder part (11); and
a diameter-enlarged part (12) having a first end and a second end, wherein the first end is connected to the straight cylinder part, the second end is opposite to the first end, and an outer diameter of the diameter-enlarged part is gradually increased in a direction from the first end to the second end.

2. The planting pot of Claim 1, wherein the straight cylinder part has a bottom surface (11B) and a circular protrusion (11P), the circular protrusion protrudes from the bottom surface, and a ratio of an outer diameter of the circular protrusion to an inner diameter of the straight cylinder part is between 0.4:1 and 0.5:1 inclusive.

3. The planting pot of any of the Claims 1 to 2, wherein the straight cylinder part has a bottom surface and a circular protrusion, the circular protrusion protrudes from the bottom surface, and a height of the circular protrusion is less than a height of the straight cylinder part.

4. The planting pot of Claim 3, wherein the height of the circular protrusion is less than or equal to a half of the height of the straight cylinder part.

5. The planting pot of any of the Claims 1 to 4, wherein a ratio of a height of the straight cylinder part to a height of the diameter-enlarged part is between 1:2 and 1:6 inclusive.

6. The planting pot of any of the Claims 1 to 5, wherein the straight cylinder part has a bottom surface, a circular protrusion and an inner peripheral surface, the circular protrusion protrudes from the bottom surface, and an annular trough is provided between the circular protrusion and the inner peripheral surface.

7. The planting pot of any of the Claims 1 to 6, wherein the straight cylinder part has an outer peripheral surface, the diameter-enlarged part has an outer wall surface, and an angle is formed between the outer wall surface and the outer peripheral surface.

8. The planting pot of Claim 7, wherein the angle is 160° to 170° inclusive.

9. The planting pot of any of the Claims 1 to 8, wherein the straight cylinder part has a bottom surface and a circular protrusion, the circular protrusion protrudes from the bottom surface, and the circular protrusion has at least one water discharging hole.

10. The planting pot of any of the Claims 1 to 9, wherein the diameter-enlarged part is used to accommodate a cultivation medium, and an outer diameter of the cultivation medium is greater than an inner diameter of the straight cylinder part.

11. The planting pot of any of the Claims 1 to 10, further comprising a pot neck part (13) connected to the second end of the diameter-enlarged part.

12. The planting pot of Claim 11, wherein the pot neck part has an inward-retracting section and a pot mouth section, the inward-retracting section is connected to the second end of the diameter-enlarged part, and the pot mouth section is connected to the inward-retracting section.

13. A planting holding plate, comprising:
a plate body; and
a plurality of planting pots as claimed in Claim 1, wherein the planting pots are connected to the plate body, and the planting pots are arranged at intervals.
